# EUROPEAN PATENT APPLICATION

(11) **EP 3 919 832 A1**
(43) Date of publication of application: **08.12.2021**
(21) Application number: 20748424.7
(22) Date of filing: 23.01.2020
(51) Int. Cl.: F24F 11/61, F24F 7/007, F24F 11/755, H05B 47/00

(54) **ENVIRONMENT CONTROL SYSTEM AND ENVIRONMENT CONTROL METHOD**

(30) Priority: 31.01.2019 JP 2019015406
(71) Applicant: Panasonic Intellectual Property Management Co., Ltd., Osaka-shi, Osaka 540-6207 (JP)
(72) Inventor: AOKI, Saki, Osaka-shi, Osaka 540-6207 (JP); SUZUKA, Yuko, Osaka-shi, Osaka 540-6207 (JP)
(74) Representative: Appelt, Christian W.
(86) International application number: PCT/JP2020/002269
(87) International publication number: WO 2020/158560

(57) **Abstract**

An environmental control system (10) includes: a wind blower (20) which blows wind toward a subject (200); and a control apparatus (120) which obtains at least one time included in a scheduled wake-up time of the subject (200), a scheduled go-to-bed time of the subject (200), a sunrise time, and a sunset time, and switches control on the wind blower (20) at the at least one time obtained.

## Description

### [Technical Field]

The present invention relates to an environmental control system and an environmental control method.

### [Technical Field]

Patent Literature 1 discloses an environmental control apparatus which detects physical states of a resident by using both biological information and behavior information, and controls housing equipment most appropriately for the individual based on the physical states.

### [Citation List]

### [Patent Literature]

[PTL 1] Japanese Unexamined Patent Application Publication No. 2001-041531

### [Summary of Invention]

### [Technical Problem]

The human autonomic nervous system consists of two kinds of nervous systems that are a sympathetic nervous system and a parasympathetic nervous system which function in contrast. The functions of the organs of a human are maintained by these two kinds of nervous systems functioning in good balance. In modern times, an increased number of people complain about health problems that occur due to imbalance in the autonomic nervous system caused by irregular lifestyles, habits, and so on.

The present invention provides the environmental control system and the environmental control method which make it possible to reduce the disorder of the autonomic nervous system of a subject.

### [Solution to Problem]

An environmental control system according to an aspect of the present disclosure includes: a wind blower which blows wind toward a subject; and a control apparatus which obtains at least one time included in a scheduled wake-up time of the subject, a scheduled go-to-bed time of the subject, a sunrise time, and a sunset time, and switches control on the wind blower at the at least one time obtained.

An environmental control method according to an aspect of the present disclosure includes: obtaining at least one time included in a scheduled wake-up time of the subject, a scheduled go-to-bed time of the subject, a sunrise time, and a sunset time; and switching control on the wind blower which blows wind toward a subject, at the at least one time obtained.

### [Advantageous Effects of Invention]

According to the present invention, it is possible to implement the environmental control system and the environmental control method which make it possible to reduce the disorder of the autonomic nervous system of the subject.

### [Brief Description of Drawings]

[FIG. 1] FIG. 1 is a diagram illustrating a configuration of the environmental control system according to an embodiment.
[FIG. 2] FIG. 2 is a diagram illustrating a function of a sympathetic nervous system and a function of a parasympathetic nervous system.
[FIG. 3] FIG. 3 is a block diagram illustrating a functional configuration of a control apparatus.
[FIG. 4] FIG. 4 is a flow chart of a switching operation performed by an environmental control system according to an embodiment.
[FIG. 5] FIG. 5 is a time chart for explaining switching of control on target apparatuses including a wind blower.
[FIG. 6] FIG. 6 is a time chart for explaining first control on the wind blower.
[FIG. 7] FIG. 7 is a diagram illustrating one example of fluctuation in wind speed.
[FIG. 8] FIG. 8 is a diagram illustrating a relationship between the function of the sympathetic nervous system and the function of the parasympathetic nervous system, and change in biological information.
[FIG. 9] FIG. 9 is a diagram indicating an operation in a schedule mode.

### [Description of Embodiments]

Hereinafter, embodiments according to the present disclosure are described with reference to the drawings. It is to be noted that each of the embodiments described below indicates a general or specific example. The numerical values, shapes, materials, constituent elements, the arrangement and connection of the constituent elements, etc. indicated in the following embodiments are mere examples, and do not limit the scope of the present invention. Among the constituent elements in the following embodiments, constituent elements not recited in the independent claim that defines the most generic concept of the present disclosure are described as optional constituent elements.

It is to be noted that each of the drawings is a schematic diagram, and is not necessarily illustrated precisely. In addition, in each of the drawings, substantially the same constituent elements may be assigned with the same numerical signs, and overlapping descriptions may be omitted or simplified.

### [Embodiment]

### [A Configuration of an Environmental Control System]

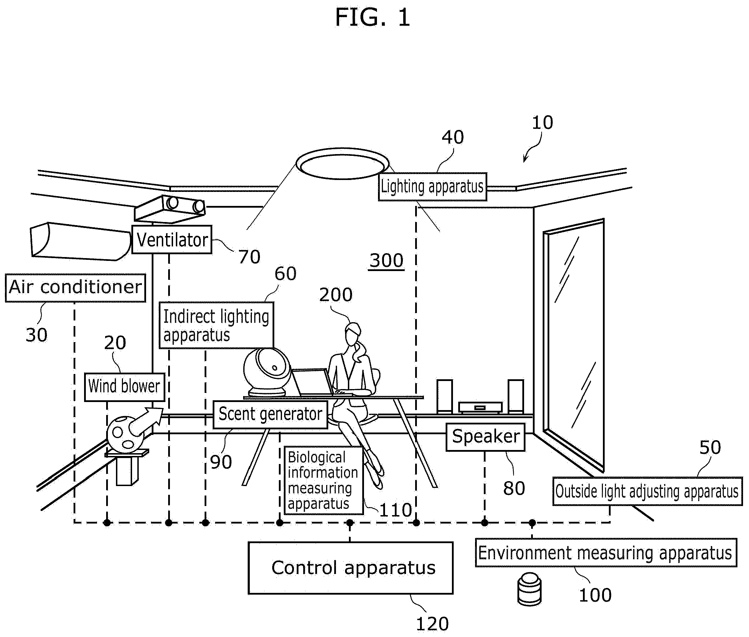

First, a configuration of the environmental control system according to an embodiment is described. FIG. 1 is a diagram illustrating the configuration of the environmental control system according to the embodiment.

Environmental control system 10 illustrated in FIG. 1 performs control for adjusting the function of the autonomic nervous system of subject 200 by controlling target apparatuses related to an environment in space 300 which is a closed space such as a room.

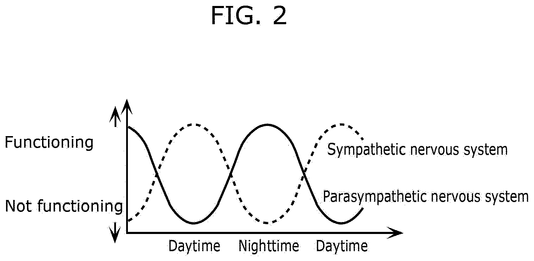

The autonomic nervous system of a human consists of two kinds of nervous systems that are the sympathetic nervous system and the parasympathetic nervous system which function in contrast. The functions of the organs of the human are maintained by these two kinds of nervous systems functioning in good balance. In general, in the human autonomic nervous system, the function of the sympathetic nervous system is dominant over the function of the parasympathetic nervous system in daytime, and the function of the parasympathetic nervous system is dominant over the function of the sympathetic nervous system in nighttime. FIG. 2 is a diagram illustrating the function of the sympathetic nervous system and the function of the parasympathetic nervous system. In other words, it can be said that a first time zone in which the function of the sympathetic nervous system should be made dominant and a second time zone in which the function of the parasympathetic nervous system should be made dominant are roughly determined.

In view of this, environmental control system 10 switches between first control and second control at a predetermined timing with consideration of at least one time included in a scheduled wake-up time of subject 200, a scheduled go-to-bed time of subject 200, a sunrise time, and a sunset time. The first control makes a function of a sympathetic nervous system dominant over a function of a parasympathetic nervous system, and the second control makes the function of the parasympathetic nervous system dominant over the function of the sympathetic nervous system. In this way, it is possible to reduce the disorder of the autonomic nervous system of subject 200.

Specifically, environmental control system 10 includes wind blower 20, air conditioner 30, lighting apparatus 40, outside light adjusting apparatus 50, indirect lighting apparatus 60, ventilator 70, speaker 80, scent generator 90, environment measuring apparatus 100, biological information measuring apparatus 110, and control apparatus 120.

Wind blower 20 is an apparatus which blows wind toward subject 200. Specifically, wind blower 20 is a wind blower which has a comparatively high directivity such as a circulator, and may be a fan.

Air conditioner 30 is an apparatus for adjusting a temperature in space 300 in which subject 200 is located. Air conditioner 30 is capable of adjusting a humidity in space 300. Air conditioner 30 makes the temperature and the humidity in space 300 closer to a temperature and a humidity directed by control apparatus 120.

Lighting apparatus 40 is an apparatus for direct lighting which illuminates space 300 in which subject 200 is located. Lighting apparatus 40 is, for example, a ceiling light including a light emitting element such as an LED as a light source. Lighting apparatus 40 may be another lighting apparatus such as a base light or a down light. Lighting apparatus 40 is capable of being subjected to light adjustment and color adjustment by control apparatus 120.

Outside light adjusting apparatus 50 is an apparatus which adjusts the amount of light that enters space 300 in which subject 200 is located. Outside light adjusting apparatus 50 is, for example, an electronic blind which can be implemented in the form of a light adjusting film. Outside light adjusting apparatus 50 may be electric blinds (electric shutters) or the like.

For example, indirect lighting apparatus 60 is capable of changing emission colors of light by including a plurality of light sources which provide different emission colors. For example, indirect lighting apparatus 60 includes a light source which emits red light, a light source which emits green light, a light source which emits blue light, and changing emission colors by adjusting the luminance of light that is emitted by each light source. Indirect lighting apparatus 60 may provide optional emission colors by combining any of the light sources and optical filters. As indirect lighting apparatus 60, for example, a spot light, a stand light, a bracket light, a pendant light, a line illuminator, or the like is used.

Ventilator 70 ventilates space 300 in which subject 200 is located. Ventilator 70 does not have a temperature adjusting function, unlike air conditioner 30. Ventilator 70 is, for example, an Energy Recovery Ventilator (ERV). Ventilator 70 may be a ventilator which does not perform heat exchange such as a ventilation fan. Alternatively, ventilator 70 may be an open/close apparatus of a window installed in space 300.

Speaker 80 is an apparatus which is disposed in space 300 in which subject 200 is located, and outputs speech, music, or the like.

Scent generator 90 is an apparatus which is disposed in space 300 in which subject 200 is located, and generates a scent. Scent generator 90 is, for example, an aroma diffuser, and may be a generator which generates another scent. Scent generator 90 may be an apparatus integrated with wind blower 20 and speaker 80.

Environment measuring apparatus 100 is an apparatus which measures environmental information in space 300 in which subject 200 is located. Environment measuring apparatus 100 is, for example, a temperature sensor which measures temperature in space 300, a humidity sensor which measures humidity in space 300, an illuminance sensor which measures illuminance in space 300, a CO₂ sensor which measures the concentration of carbon dioxide (CO₂) in space 300, or the like.

Biological information measuring apparatus 110 is an apparatus which measures biological information about subject 200. Biological information measuring apparatus 110 measures, as biological information, a body temperature, a blood pressure, a heart rate, a pulse wave, the amount of sweating, an epidermis temperature, a facial expression, etc. of subject 200. Biological information measuring apparatus 110 may measure a Very Low Frequency (VLF), a High Frequency (HF), a Low Frequency (LF), LF/HF, inspiration time, exhaustion time, pause time, etc. which are calculated based on the heart rate, the pulse wave, and a respiratory variation waveform. Biological information measuring apparatus 110 is, for example, a wearable sensor (that is, a contact sensor) which is attached to the body of subject 200, and may be a non-contact sensor. Examples of such a non-contact sensor includes a radio wave sensor capable of measuring heart rates, respiratory rates, pulse waves, etc. and a camera capable of measuring pupil diameters or facial expressions.

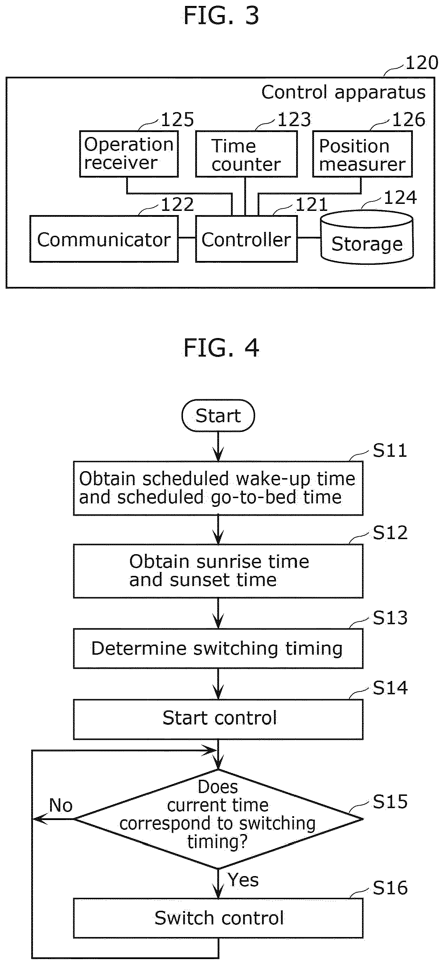

Control apparatus 120 is an apparatus which controls target apparatuses such as wind blower 20, air conditioner 30, lighting apparatus 40, outside light adjusting apparatus 50, indirect lighting apparatus 60, ventilator 70, speaker 80, and scent generator 90. FIG. 3 is a block diagram illustrating a functional configuration of control apparatus 120.

As illustrated in FIG. 3, control apparatus 120 includes controller 121, communicator 122, time counter 123, storage 124, operation receiver 125, and position measurer 126.

Controller 121 controls target apparatuses by causing communicator 122 to transmit control signals. Controller 121 may be implemented in the form of, for example, a microcomputer, but may be implemented in the form of a processor.

Communicator 122 is a communication circuit (in other words, a communication module) which allows control apparatus 120 to communicate with the target apparatuses. For example, communicator 122 transmits control signals to target apparatuses under control of controller 121. In addition, communicator 122 receives environmental information about space 300 from environment measuring apparatus 100, and receives biological information of subject 200 from biological information measuring apparatus 110. Communicator 122 may perform wireless communication for example, but may perform wired communication. Communication standards for communication that is performed by communicator 122 are not particularly limited.

Time counter 123 measures current time. Time counter 123 is implemented in the form of a real time clock for example.

Storage 124 is a storage apparatus in which a control program allowing controller 121 to control each target apparatus is stored. Storage 124 is implemented in the form of a semiconductor memory for example.

Operation receiver 125 receives, from a user such as subject 200, an operation (for example, a setting operation regarding first control that makes the function of the sympathetic nervous system dominant, or a setting operation regarding second control that makes the function of the parasympathetic nervous system dominant). Operation receiver 125 is implemented in the form of a touch panel, hardware buttons, or the like.

Position measurer 126 measures a current position of control apparatus 120 (in other words, the location of space 300). Position measurer 126 is implemented as a Global Positioning System (GPS) module which obtains a GPS signal (that is, a radio wave transmitted from a satellite), and measures a current position of control apparatus 120 based on the GPS signal obtained.

### [Switching Control on the Wind Blower]

Environmental control system 10 obtains at least one time included in a scheduled wake-up time of subject 200, a scheduled go-to-bed time of subject 200, a sunrise time, and a sunset time, and switches control on wind blower 20 at the at least one time obtained. More specifically, environmental control system 10 switches between first control and second control. The first control makes the function of the sympathetic nervous system of subject 200 dominant over the function of the parasympathetic nervous system of subject 200, and second control makes the function of the parasympathetic nervous system of subject 200 dominant over the function of the sympathetic nervous system of subject 200. FIG. 4 is a flow chart of a switching operation performed by environmental control system 10.

First, controller 121 of control apparatus 120 obtains a scheduled wake-up time of subject 200 and a scheduled go-to-bed time of subject 200 (S11). Control unit 121 obtains the scheduled wake-up time of subject 200 and the scheduled go-to-bed time of subject 200, based on a time specifying operation performed by subject 200 and received by operation receiver 125. The scheduled wake-up time and the scheduled go-to-bed time obtained are stored as setting information onto storage 124. The scheduled wake-up time of subject 200 and the scheduled go-to-bed time of subject 200 may be a scheduled wake-up time of subject 200 and a scheduled go-to-bed time of subject 200 which are estimated based on a daily life cycle calculated from a biological information database of subject 200 and which are automatically set. The biological information database is obtained from biological information measuring apparatus 110. Alternatively, a suitable wake-up time and a suitable go-to-bed time of subject 200 calculated from the biological information database of biological information measuring apparatus 110 may be automatically set as the scheduled wake-up time of subject 200 and the scheduled go-to-bed time of subject 200.

Next, controller 121 obtains a sunrise time and a sunset time of a day on which a switching operation is performed (S12). For example, controller 121 obtains the sunrise time and the sunset time, based on a time specifying operation performed by subject 200. In other words, subject 200 directly manually inputs the times. The sunrise time and the sunset time obtained are stored as setting information onto storage 124.

It is to be noted that methods of obtaining a sunrise time and a sunset time are not limited to such manual input by subject 200. For example, control unit 121 may obtain a sunrise time and a sunset time, based on a location specifying operation for specifying a location of space 300 in which subject 200 is located. Specifically, when an operation of selecting the name of a city (in other words, the name of a region) such as "Osaka" is performed by subject 200, controller 121 asks, using communicator 122, an outside server device (for example, a server which manages weather information) for a sunrise time and a sunset time in the selected city. As a result, controller 121 is capable of obtaining the sunrise time and the sunset time from the outside server device via communicator 122.

Alternatively, control unit 121 may obtain a sunrise time and a sunset time, based on information obtained from a satellite positioning system (more specifically, a GPS system). Specifically, position measurer 126 calculates a current position (coordinates) based on a GPS signal obtained, and controller 121 calculates (in other words, obtains) the sunrise time and the sunset time through predetermined computation processing based on the current position calculated. Control unit 121 may transmit information indicating the current position to an outside server using communicator 122, and the outside server may calculate a sunrise time and a sunset time. In this case, controller 121 obtains the sunrise time and the sunset time from the outside server.

Next, controller 121 determines a control switching timing (S13). Specifically, controller 121 determines a scheduled wake-up time to be a timing for switching from the second control to the first control, and determines an earlier one of a scheduled go-to-bed time and a sunset time to be a timing for switching from the first control to the second control.

It is to be noted that controller 121 may determine a sunrise time to be a timing for switching from the second control to the first control when the scheduled wake-up time is a late time (for example, a time close to a noon). In addition, as described later, in the cases in which a sunset time is earlier than a scheduled go-to-bed time, the second control may include a before-sleep control which is performed in a period from a sunset time to a scheduled go-to-bed time and a during-sleep control which is performed in the period starting at the scheduled go-to-bed time. In other words, switching between the before-sleep control and the during-sleep control may be performed.

Subsequently, controller 121 starts control (either the first control and the second control) on wind blower 20 (S14), and determines whether or not a current time measured by time counter 123 corresponds to a switching timing (S15). Controller 121 continues current control until a current time is determined to correspond to the switching timing (No in S15). When a current time is determined to correspond to the switching timing (Yes in S15), controller 121 switches control (S16).

### [Details of Control on the Wind Blower]

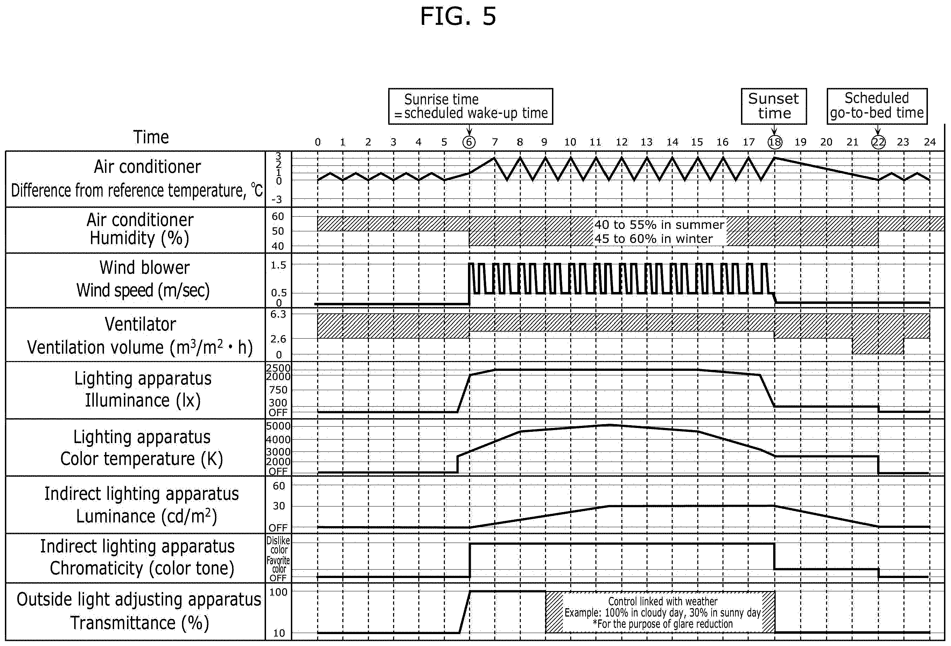

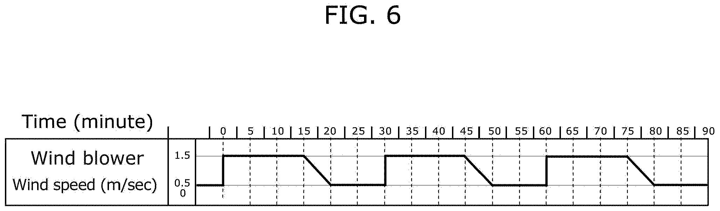

First, details of control on wind blower 20 are described. FIG. 5 is a time chart for explaining switching of control on target apparatuses including wind blower 20. FIG. 6 is a time chart for explaining first control on wind blower 20 (the time chart is a partially enlarged diagram of the control on wind blower 20 in FIG. 5). It is to be noted that the time chart in FIG. 5 is a time chart in the case where both a sunrise time and a scheduled wake-up time are 6:00, a sunset time is 18:00, and a scheduled go-to-bed time is 22:00.

Wind blower 20 is disposed at a position at which wind blower 20 can blow wind to body parts of subject 200 with exposed skin such as the arms, neck, and face. Wind blower 20 is disposed so that head wind is blown to the face of subject 200, for example. Direct touch of wind on the body surface of subject 200 gives strong stimuli which can cause, for example, decrease in feeling temperature of subject 200 and decrease in oxygen concentration around the face of subject 200. This makes the function of the sympathetic nervous system dominant.

Controller 121 of control apparatus 120 controls wind blower 20 in the installation condition. First, the first control of wind blower 20 is described (the first control is the control which makes the function of the sympathetic nervous system of subject 200 dominant over the function of the parasympathetic nervous system).

The first control on wind blower 20 is performed in a period from 6:00 to 18:00 in the time chart in FIG. 5. Controller 121 causes wind blower 20 to change the wind speed of wind to be blown at a predetermined cycle in a range from 15 minutes to 60 minutes. In addition, controller 121 sets a time during which a wind speed is a smallest value to less than 75% of the predetermined cycle. Such temporal changes in wind speed constantly give stimuli by wind to subject 200 (prevent subject 200 from getting used to the stimuli by wind) and reduce the degree of fatigue of subject 200. This makes it easier to maintain the function of the sympathetic nervous system dominant

More specifically, as indicated in FIG. 6, controller 121 causes wind blower 20 to change the wind speed of the wind to be blown at a 30-miniute cycle. The wind speed of the wind to be blown by wind blower 20 reaches a largest value (for example, 1.5 m/sec) immediately after the start of control, and is maintained at the largest value for 15 minutes. Subsequently, the wind speed decreases linearly for 5 minutes to reach the smallest value (for example, 0.5 m/sec), and is maintained at the smallest value for 10 minutes.

In general, it is considered that human concentration lasts approximately from 15 minutes to 60 minutes. Thus, change in wind speed at the predetermined cycle in the range from 15 minutes to 60 minutes (for example, the 30-minute cycle) gives stimuli to subject 200 effectively. Although the time during which the wind speed is the smallest value corresponds to 33% of the predetermined cycle in the above-described example, it is only necessary that the time correspond to 75% or less of the predetermined cycle.

With detailed consideration by the Inventors, when the predetermined cycle is divided into a first period in which a wind speed is a smallest value (that is, there is no wind or there is a breeze) and a second period other than the first period, it is desirable that the length of the first period be 15 minutes or less, and the length of the second period be 20 minutes or less. In other words, it is desirable that the first period be in a range approximately from 5 minutes to 25 minutes. Likewise, it is desirable that the second period be in a range approximately from 10 minutes to 30 minutes.

In addition, in FIG. 5, the time (for example, a time close to 0) from when the wind speed of the wind blown by wind blower 20 changes from the smallest value to the largest value is shorter than the time (for example, 5 minutes) from when the wind speed of the wind blown by wind blower 20 changes from the largest value to the smallest value.

In this way, a time from when the wind speed of the wind blown by wind blower 20 becomes a smallest value to when the smallest value changes to a largest value is set to a comparatively short time, which makes it possible to give stimuli to subject 200 effectively. Furthermore, since a time from when the wind speed of the wind to be blown by wind blower 20 becomes a smallest value to when the smallest value changes to a largest value is set to a comparatively short time, it is possible to prevent subject 200 from feeling strange.

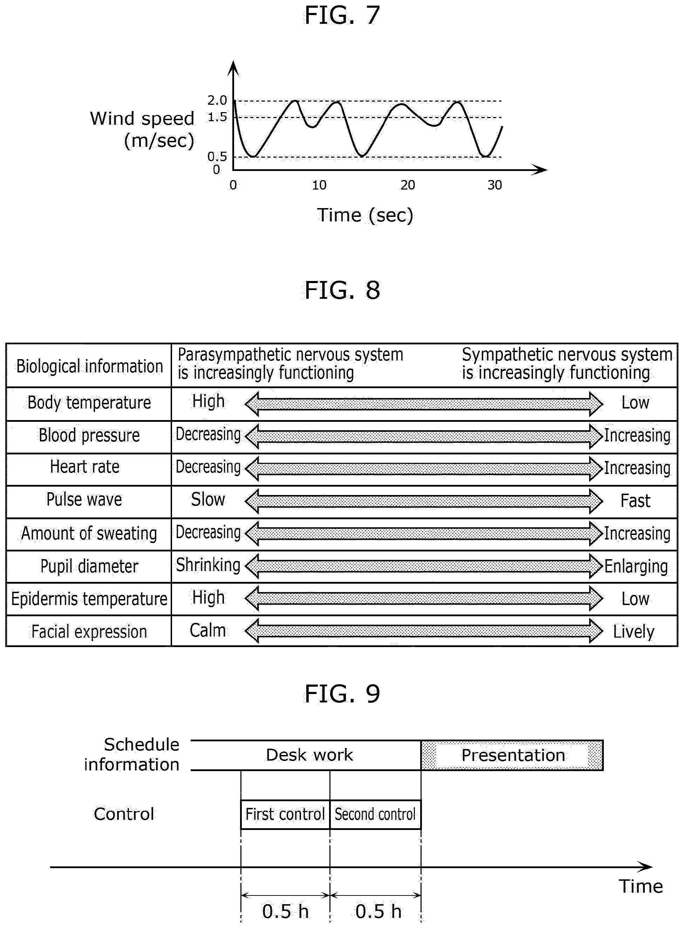

Although not illustrated precisely in FIG. 5, controller 121 changes the wind speed of the wind blown by wind blower 20 from a largest fluctuation value (for example, 2.0 m/sec) to a smallest fluctuation value (for example, 0.5 m/sec), based on the largest value (for example, 1.5 m/sec). In other words, although the wind speed looks changing linearly in FIG. 5, the wind speed actually changes more finely in the linear change. Hereinafter, such a change in wind speed is also referred to as a "fluctuation". FIG. 7 is a diagram illustrating one example of such a fluctuation in wind speed.

The fluctuation in wind speed is a 1/f fluctuation for example, but may be a random fluctuation. The 1/f fluctuation means a fluctuation in which a power spectrum density is inverse proportional to frequency f. The fluctuation in wind speed is formed at a cycle on the order of several seconds that is in a range approximately from 1 second to 10 seconds. In other words, controller 121 fluctuates the wind speed of the wind to be blown by wind blower 20 at a time interval shorter than the predetermined cycle (for example, 30-minute cycle).

Such a constant change in wind speed can give constant stimuli by wind to subject 200 (prevent subject 200 from getting used to the stimuli by wind), which makes it easier to maintain the state in which the function of the sympathetic nervous system is dominant. In addition, a non-cyclical fluctuation can give constant stronger stimuli by wind to subject 200 (prevent subject 200 from getting used to the stimuli by wind).

Next, the second control on wind blower 20 is described (the second control is the control which makes the function of the parasympathetic nervous system of subject 200 dominant over the function of the sympathetic nervous system). In the time chart in FIG. 5, the second control on wind blower 20 is performed in a period from 18:00 in a day to 6:00 in the next day.

Controller 121 stops the wind blown by wind blower 20 in the second control. Since this reduces stimuli given to subject 200 by the wind blown by wind blower 20, it becomes possible to make the function of the parasympathetic nervous system dominant. It is to be noted that controller 121 may cause wind blower 20 to blow a breeze in the second control. In the second control, controller 121 may cause wind blower 20 to blow wind at a wind speed lower than in the first control.

### [Switching of Control on the Air Conditioner]

First, control on air conditioner 30 is described. First, first control on air conditioner 30 is described. The first control on air conditioner 30 is performed in the period from 6:00 to 18:00 in the time chart in FIG. 5. Controller 121 increases and decreases a surrounding temperature around subject 200 using air conditioner 30. Controller 121 increases the surrounding temperature to +3 degrees Celsius that is a reference temperature for 1 hour in an initial period from the start of the first control, decreases the surrounding temperature by 3 degrees Celsius for 30 minutes, and then increases the surrounding temperature by 3 degrees Celsius for 30 minutes. It is desirable that temperatures be changed within 30 minutes. After the above changes, such temperature changes are repeated. Reference temperatures differ depending on seasons. For example, reference temperatures are 26 degrees Celsius in summer, 22 degrees Celsius in spring and autumn, and 20 degrees Celsius in winter. In order to make the function of the sympathetic nervous system dominant, there are cases in which a temperature is preferably changed by 3 degrees Celsius or more. With consideration of health, it is only necessary that temperatures change within 5 degrees Celsius. In the example of FIG. 5, temperatures change by 3 degrees Celsius.

A surrounding temperatures around subject 200 is measured by, for example, environment measuring apparatus 100. Controller 121 controls air conditioner 30 based on the temperature measured by environment measuring apparatus 100. Controller 121 may increase and decrease a temperature to be set of air conditioner 30 at the 60-minute cycle as described above without using environment measuring apparatus 100.

In this way, controller 121 increases and decreases the temperature at predetermined cycles (for example, at the 60-minutes cycles). Such temporal changes in temperature constantly give stimuli by temperatures to subject 200 (prevent subject 200 from getting used to the stimuli by temperatures) and reduce the degree of fatigue of subject 200. This makes it easier to maintain the state in which the function of the sympathetic nervous system of subject 200 dominant.

It is to be noted that controller 121 keeps a humidity in space 300 in a range from 40% to 60% using air conditioner 30 while the first control is being performed. More specifically, controller 121 sets a humidity in space 300 to a humidity in a range from 40% to 55% in summer, and sets a humidity in space 300 to a humidity in a range from 45% to 60% in winter.

Next, a second control on air conditioner 30 is described. The second control on air conditioner 30 is performed in the period from 18:00 in the day to 6:00 in the next day in the time chart in FIG. 5. The second control is divided to the before-sleep control which is performed in a period from 18:00 (that is the sunset time) to 22:00 (that is the scheduled go-to-bed time) and the during-sleep control which is performed in the period starting at 22:00.

In the before-sleep control, controller 121 gradually decreases the temperature in space 300 so that the temperature becomes the reference temperature at the scheduled go-to-bed time. In the example of FIG. 5, controller 121 decreases the temperature by 4 degrees Celsius for 4 hours.

In the following during-sleep control, controller 121 increases the surrounding temperature by 1 degree Celsius for 30 minutes, and then decreases the surrounding temperature by 1 degree Celsius for 30 minutes. It is desirable that temperatures be changed within 30 minutes. After the above changes, such temperature changes are repeated.

In this way, controller 121 increases and decreases the temperature slightly (specifically, by approximately 3 degrees Celsius or less) at the predetermined cycle (for example, at the 60-minute cycle). In general, a human repeats basal metabolism in which his/her body is cooled down by sweating when the body generates heat excessively, and his/her body generates heat again after an elapse of time. Keeping a surrounding temperature around subject 200 constant leads to ignoring such a basal metabolism, and thus subject 200 inevitably feels too hot or too cold.

In comparison, slightly changing temperatures at a cycle with consideration of the body metabolism of subject 200 can increase comfortableness while reducing stimuli by temperatures given to subject 200. This can make the function of the parasympathetic nervous system of subject 200 dominant.

It is to be noted that controller 121 keeps a humidity in space 300 in a range from 40% to 60% using air conditioner 30 while the before-sleep control is being performed. More specifically, controller 121 sets a humidity in space 300 to a humidity in a range from 40% to 55% in summer, and sets a humidity in space 300 to a humidity in a range from 45% to 60% in winter.

It is to be noted that controller 121 keeps a humidity in space 300 in a range from 50% to 60% using air conditioner 30 while the during-sleep control is being performed.

### [Control on the Lighting Apparatus]

Next, switching of control on lighting apparatus 40 is described. First, first control on lighting apparatus 40 is described. The first control on lighting apparatus 40 is performed in the period from 6:00 to 18:00 in the time chart in FIG. 5.

Controller 121 causes lighting apparatus 40 in an OFF state to turn on before 30 minutes from the start of the first control and to increase the illuminance in space 300 to 2000 Ix for 30 minutes. For example, controller 121 then increases the illuminance in space 300 up to 2500 Ix for 1 hour. It is desirable that the illuminance be changed with time in such a manner that subject 200 does not feel uncomfortable due to illuminance changes.

For example, the illuminance in space 300 is maintained at 2500 Ix until 15:00, and then is decreased to 2000 Ix for 2 and a half hours, and then is further decreased to 300 Ix for 30 minutes.

When the illuminance in space 300 is high in this way, it is possible to make the function of the sympathetic nervous system of subject 200 dominant. It is to be noted that a largest illuminance in space 300 in the first control may be 2500 Ix or more.

In addition, as for the color temperature of lighting apparatus 40, controller 121 causes lighting apparatus 40 to turn on at 2500 K before 30 minutes from the start of the first control. Controller 121 then increases the color temperature of lighting apparatus 40 to 4500 K for 2 and a half hours, and then further increases the color temperature to 5000 K for 3 and a half hours.

Controller 121 then decreases the color temperature of lighting apparatus 40 to 4500 K for 3 and a half hours, and then to 3000 K for 2 and a half hours, and then further to 2500 K for 30 minutes.

By changing the color temperature in space 300 to a color temperature approximately equal to an outside color temperature (the color temperature of sunlight), it becomes possible to make the function of the sympathetic nervous system of subject 200 dominant.

Next, second control on lighting apparatus 40 is described. The second control on lighting apparatus 40 is performed in the period from 18:00 in the day to 6:00 in the next day in the time chart in FIG. 5. The second control is divided to the before-sleep control which is performed in the period from 18:00 to 22:00 and the during-sleep control which is performed in the period starting at 22:00.

In the before-sleep control, controller 121 sets the illuminance in space 300 to 300 Ix by controlling lighting apparatus 40. In addition, controller 121 sets the color temperature of lighting apparatus 40 to 2500 K. In the during-sleep control, controller 121 tuns off lighting apparatus 40.

Reducing the illuminance in space 300 in this way reduces the stimuli by light given to subject 200, which can make the function of the parasympathetic nervous system of subject 200 dominant.

### [Switching of Control on the Outside Light Adjusting Apparatus]

Next, control on outside light adjusting apparatus 50 is described. First, the first control on outside light adjusting apparatus 50 is described. The first control on outside light adjusting apparatus 50 is performed in the period from 6:00 to 18:00 in the time chart in FIG. 5.

Controller 121 increases a transmittance of outside light adjusting apparatus 50 to 100% before the start of the first control for 30 minutes, and maintains the 100% state for 3 hours after the 30 minutes. An initial transmittance value is, for example, 10%.

When the illuminance in space 300 is increased and kept high in this way, it is possible to make the function of the sympathetic nervous system of subject 200 dominant.

Subsequently, controller 121 controls outside light adjusting apparatus 50 according to a weather until the end time (18:00) of the first control. This control is performed based on an illuminance indicated by an illuminance sensor included in outside light adjusting apparatus 50. For example, controller 121 sets a transmittance of outside light adjusting apparatus 50 to 100% when the weather is cloudy (when the illuminance indicated by the illuminance sensor is comparatively low), and decreases a transmittance to approximately 30% for the purpose of reducing glare, and so on, when the weather is sunny (when the illuminance indicated by the illuminance sensor is comparatively high).

Next, second control on outside light adjusting apparatus 50 is described. The second control on lighting apparatus 40 is performed in the period from 18:00 in the day to 6:00 in the next day in the time chart in FIG. 5. In the second control, the transmittance of outside light adjusting apparatus 50 is set to 10%.

Reducing the illuminance in space 30 in this way reduces the stimuli by light given to subject 200, which can make the function of the parasympathetic nervous system of subject 200 dominant.

### [Switching of Control on the Indirect Lighting Apparatus]

Next, switching of control on indirect lighting apparatus 60 is described. First, the first control on indirect lighting apparatus 60 is described. The first control on indirect lighting apparatus 60 is performed in the period from 6:00 to 18:00 in the time chart in FIG. 5.

In the first control, controller 121 causes indirect lighting apparatus 60 to turn on, and increases the luminance of indirect lighting apparatus 60 to 60 cd/m² for 5 and a half hours. Subsequently, controller 121 sets the luminance of indirect lighting apparatus 60 to 60 cd/m² until the end of the first control.

Although not precisely illustrated in FIG. 5, controller 121 fluctuates the illuminance of light that is emitted by indirect lighting apparatus 60 while the luminance of indirect lighting apparatus 60 is 60 cd/m² (in other words, in a period from 11:30 to 18:00). For example, controller 121 increases and decreases the brightness of the light to be emitted by indirect lighting apparatus 60 at one or more cycles on the order of several seconds that are in a range approximately from 1 second to 10 seconds (a constant cycle or random cycles are possible). The light to be emitted by indirect lighting apparatus 60 may fluctuate with constant amplification or with random amplification. For example, controller 121 may fluctuate the illuminance of the light to be emitted by indirect lighting apparatus 60 as indicated by a wind speed waveform in FIG. 7.

Such constant change in illuminance of indirect light gives stimuli by indirect light to subject 200 (prevent subject 200 from getting used to the stimuli by indirect light), which makes it easier to keep subject 200 in the state in which the function of the sympathetic nervous system is dominant.

As for a chromaticity of indirect lighting apparatus 60, controller 121 causes indirect lighting apparatus 60 to emit light having an unfavorite emission color that subject 200 does not like in the first control. Information indicating the unfavorite emission color of subject 200 is stored in advance in storage 124 according to an operation performed by subject 200 and received by operation receiver 125. This can make the function of the sympathetic nervous system of subject 200 dominant.

Next, second control on indirect lighting apparatus 60 is described. The second control on indirect lighting apparatus 60 is performed in the period from 18:00 in the day to 6:00 in the next day in the time chart in FIG. 5. The second control is divided to the before-sleep control which is performed in the period from 18:00 to 22:00 and the during-sleep control which is performed in the period starting at 22:00.

In the before-sleep control, controller 121 decreases the luminance of indirect lighting apparatus 60 so that indirect lighting apparatus 60 turns off at the scheduled go-to-bed time. Controller 121 causes indirect lighting apparatus 60 to emit light having a favorite emission color that subject 200 likes. Information indicating the favorite emission color of subject 200 is stored in advance in storage 124 according to an operation performed by subject 200 and received by operation receiver 125. This can make the function of the parasympathetic nervous system of subject 200 dominant. In the during-sleep control, indirect lighting apparatus 60 is off.

It is to be noted that the Inventors have confirmed through an experiment that causing indirect lighting apparatus 60 to emit light having a favorite color that a subject likes makes the function of the parasympathetic nervous system dominant, and causing indirect lighting apparatus 60 to emit light having an unfavorite color that the subject does not like makes the function of the sympathetic nervous system dominant.

### [Switching of Control on the Ventilator]

Next, control on ventilator 70 is described. First, the first control on ventilator 70 is described. The first control on ventilator 70 is performed in the period from 6:00 to 18:00 in the time chart in FIG. 5. In the first control, controller 121 sets the concentration of carbon dioxide in space 300 to 800 ppm or less using ventilator 70. This corresponds to a ventilation volume of 3.0 m³/m² h or more in a general living space. For example, controller 121 sets the concentration of carbon dioxide in space 300 to 800 ppm or less by increasing the ventilation volume of ventilator 70 when the concentration of the carbon dioxide in space 300 is high. For example, the concentration of the carbon dioxide in space 300 is measured by environment measuring apparatus 100, and controller 121 controls ventilator 70 based on the concentration of the carbon dioxide measured by environment measuring apparatus 100.

In this way, decreasing the concentration of carbon dioxide in space 300 makes it possible to make the function of the sympathetic nervous system of subject 200 dominant.

Next, second control on ventilator 70 is described. The second control on ventilator 70 is performed in the period from 18:00 in the day to 6:00 in the next day in the time chart in FIG. 5. In the initial 3 hours in the second control, controller 121 sets the concentration of carbon dioxide in space 300 to 1000 ppm or less using ventilator 70. This corresponds to a ventilation volume of 2.6 m³/m² h or more in a general living space. Controller 121 sets the concentration of carbon dioxide in space 300 to a concentration in a range from 2000 ppm 3000 ppm during the subsequent 2 hours (in other words, from 1 hour before to 1 hour after the scheduled go-to-bed time). Subsequently, controller 121 sets the concentration of carbon dioxide in space 300 to 1000 ppm or less using ventilator 70.

Adjusting the concentration of the carbon dioxide in space 300 in this way can make the function of the parasympathetic nervous system of subject 200 dominant.

### [Control on the Speaker]

Next, control on speaker 80 is described. Controller 121 changes a sound to be output by speaker 80 when the wind speed of the wind to be blown by wind blower 20 increases. "Changing a sound" here includes starting to output a sound in a state in which no sound is output. For example, speaker 80 outputs a comparatively up-tempo musical piece. In this way, the sound change is made as another stimulus at the timing at which wind blower 20 increases the wind speed, that is, at the timing at which the stimulus to subject 200 is increased. Thus, stimuli are further increased. Accordingly, it is possible to make the function of the sympathetic nervous system of subject 200 further dominant.

Furthermore, controller 121 changes a sound to be emitted by speaker 80 in the second control. "Changing a sound" here includes starting to output a sound in a state in which no sound is output. For example, speaker 80 outputs a sound which provides a relaxing effect such as a healing musical piece or a comparatively slow-tempo musical piece. This can make the function of the parasympathetic nervous system of subject 200 dominant.

### [Control on the Scent Generator]

Next, control on scent generator 90 is described. Controller 121 changes a scent to be generated by scent generator 90 when the wind speed of the wind to be blown by wind blower 20 increases. "Changing a scent" here includes starting to generate a scent in a state in which no scent is generated. For example, scent generator 90 generates a scent with a comfortable stimulus such as a scent of mint. In this way, the scent change is made as another stimulus at the timing at which wind blower 20 increases the wind speed, that is, at a timing at which the stimulus to subject 200 is further increased. Thus, stimuli are further increased. Accordingly, it is possible to make the function of the sympathetic nervous system of subject 200 further dominant.

Controller 121 changes a scent to be generated by scent generator 90 in the second control. "Changing a scent" here includes starting to generate a scent in a state in which no scent is generated. Scent generator 90 generates a low-stimulus scent in which phytoncide, etc. is included, a scent of lavender, or the like. This can make the function of the parasympathetic nervous system of subject 200 dominant.

### [Variation 1]

Control apparatus 120 may obtain biological information of subject 200, and adjust details of control on wind blower 20, based on the obtained biological information. The biological information is measured by biological information measuring apparatus 110. FIG. 8 is a diagram illustrating a relationship between the function of the sympathetic nervous system and the function of the parasympathetic nervous system, and change in biological information. As indicated in FIG. 8, the biological information of subject 200 relates to the function of the sympathetic nervous system and the function of the parasympathetic nervous system. The biological information includes, for example, measured data of body temperatures, blood pressures, heart rates, pulse waves, the amounts of sweating, pupil diameters, epidermis temperatures, and facial expressions. The measured data of the biological information can be used as indicators for adjusting the details of the control on wind blower 20.

For example, controller 121 of control apparatus 120 monitors a heart rate of subject 200 measured by biological information measuring apparatus while the first control is being executed, and comparers the heart rate with a predetermined reference data stored in storage 124. For example, changes in heart rate in resting periods in several days of subject 200 are obtained, and the average change in heart rate per day is stored as the reference data of the heart rate onto storage 124. It is only necessary that the reference data be determined empirically or experimentally in advance, and it is not necessary that the reference data be determined based on actual values of heart rates of subject 200 in the past.

When the heart rate is lower than the reference data, the function of the sympathetic nervous system is estimated to be weak, and it is considered that the first control that makes the function of the sympathetic nervous system further dominant needs to be performed. In view of this, controller 121 shortens the cycle in the first control or increases the largest value of the wind speed in the first control, in order to increase the stimulus given to subject 200. When the function of the sympathetic nervous system of subject 200 is estimated to be weaker than normal, environmental control system 10 is capable of adjusting the details of the first control so as to make the function of the sympathetic nervous system further dominant. In other words, it is possible to reduce the disorder of the autonomic nervous system of subject 200. It is to be noted that the same operation can be performed using biological information other than the heart rates.

### [Variation 2]

The above embodiment describes that environmental control system 10 performs the operation mode for switching the first control and the second control at the predetermined timing with consideration of at least one time included in the scheduled wake-up time of subject 200, the scheduled go-to-bed time of subject 200, the sunrise time, and the sunset time (the operation mode is hereinafter also referred to as a circadian rhythm mode). Environmental control system 10 may switch the circadian rhythm mode and another operation mode by a predetermined operation being received by operation receiver 125 of control apparatus 120. In other words, environmental control system 10 may selectively execute the circadian rhythm mode and the other operation mode.

Examples of the other operation mode include a manual mode which makes it possible to freely switch between the first control and the second control by subject 200 performing an operation. Another example of the other operation mode is a schedule mode.

In the schedule mode, control apparatus 120 obtains schedule information of subject 200, and switches between the first control and the second control at a predetermined timing, based on the schedule information obtained. FIG. 9 is a diagram indicating the operation in the schedule mode. For example, such schedule information is prestored in storage 124 by operation receiver 125 receiving an operation for inputting a schedule from a user such as subject 200.

As indicated in FIG. 9, it is assumed that a presentation by subject 200 is scheduled in schedule information. When subject 200 is estimated to be nervous before the presentation as indicated, a wakefulness of subject 200 is once increased and then subject 200 is allowed to be relaxed instead of simply being allowed to be relaxed. In this way, subject 200 has the feeling of nervousness and the feeling of relaxing in good balance during the presentation, which enables subject 200 to exert the high performance.

In view of this, when an hour is left before a next schedule (for example, a presentation), controller 121 executes the first control during initial 30 minutes, and then the second control after the initial 30 minutes. In this way, subject 200 has the feeling of nervousness and the feeling of relaxing in good balance during the presentation, which enables subject 200 to exert the high performance. It is to be noted that the first control and the second control may be switched suitably for a behavior other than the presentation before the behavior.

In this way, environmental control system 10 may control wind blower 20, etc. based on the predetermined operation, regardless of the at least one time included in the scheduled wake-up-time of subject 200, the scheduled go-to-bed time of subject 200, the sunrise time, and the sunset time.

### [Effects, etc.]

As described above, environmental control system 10 includes: wind blower 20 which blows wind toward subject 200; and control apparatus 120 which obtains the at least one time included in the scheduled wake-up time of subject 200, the scheduled go-to-bed time of subject 200, the sunrise time, and the sunset time, and switches control on wind blower 20 at the at least one time obtained.

Environmental control system 10 is capable of reducing the disorder of the autonomic nervous system of subject 200 by appropriately switching control on wind blower 20 at the at least one time included in the scheduled wake-up time of subject 200, the scheduled go-to-bed time of subject 200, the sunrise time, and the sunset time.

In addition, for example, control apparatus 120: obtains the scheduled wake-up time, the scheduled go-to-bed time, and the sunset time; performs first control which makes the function of the sympathetic nervous system of subject 200 dominant over the function of the parasympathetic nervous system of subject 200 by changing a wind speed of the wind that is blown by wind blower 20 at a predetermined cycle during a period from the scheduled wake-up time to an earlier one of the scheduled go-to-bed time and the sunset time; and performs second control which makes the function of the parasympathetic nervous system of subject 200 dominant over the function of the sympathetic nervous system of subject 200 by decreasing a wind speed of the wind that is blown by wind blower 20 to a wind speed lower than in the first control, the second control being started at or after the earlier one of the scheduled go-to-bed time or the sunset time.

Environmental control system 10 is capable of reducing the disorder of the autonomic nervous system of subject 200 by switching between the first control and the second control according to the circadian rhythm.

In addition, for example, in the first control, control apparatus 120 fluctuates the wind speed of the wind that is blown by wind blower 20 at a time interval shorter than the predetermined cycle.

Environmental control system 10 is capable of constantly giving stimuli by wind to subject 200 by changing the wind speed with time. This prevents subject 200 from getting used to the stimuli by wind, which makes it easier to maintain the state in which the function of the sympathetic nervous system is dominant.

In addition, for example, environmental control system 10 further includes air conditioner 30 for adjusting a temperature in space 300 in which subject 200 is located. Control apparatus 120 switches control on air conditioner 30 at the at least one time obtained.

Environmental control system 10 is capable of reducing the disorder of the autonomic nervous system of subject 200 by switching the first control on air conditioner 30.

In addition, for example, environmental control system 10 further includes lighting apparatus 40 which illuminates space 300 in which subject 200 is located. Control apparatus 120 switches color temperature control on lighting apparatus 40 at the at least one time obtained.

Environmental control system 10 is capable of reducing the disorder of the autonomic nervous system of subject 200 by switching the color temperature control on lighting apparatus 40.

In addition, for example, environmental control system 10 further includes lighting apparatus 40 which illuminates space 300 in which subject 200 is located. Control apparatus 120 switches illuminance control on lighting apparatus 40 at the at least one time obtained.

Environmental control system 10 is capable of reducing the disorder of the autonomic nervous system of subject 200 by switching the illuminance control on lighting apparatus 40 in space 300.

In addition, for example, environmental control system 10 further includes indirect lighting apparatus 60 disposed in space 300 in which subject 200 is located. Control apparatus 120 switches an emission color of light that is emitted by indirect lighting apparatus 60 between a favorite color that subject 200 likes and an unfavorite color that subject 200 does not like at the at least one time obtained, the favorite color and the unfavorite color being set in advance.

Environmental control system 10 is capable of reducing the disorder of the autonomic nervous system of subject 200 by switching the emission color of light that is emitted by indirect lighting apparatus 60.

In addition, environmental control system 10 further includes ventilator 70 which ventilates space 300 in which subject 200 is located. Control apparatus 120 switches control of a carbon dioxide concentration on ventilator 70 in space 300 at the at least one time obtained.

Environmental control system 10 is capable of reducing the disorder of the autonomic nervous system of subject 200 by switching the control on ventilator 70 which ventilates space 300.

In addition, for example, environmental control system 10 further includes outside light adjusting apparatus 50 which adjusts an amount of outside light that enters space 300 in which subject 200 is located. Control apparatus 120 switches control on outside light adjusting apparatus 50 at the at least one time obtained.

Environmental control system 10 is capable of reducing the disorder of the autonomic nervous system of subject 200 by switching the control on outside light adjusting apparatus 50.

In addition, environmental control system 10 further includes speaker 80 and scent generator 90 which are disposed in space 300 in which subject 200 is located.

Environmental control system 10 is capable of reducing the disorder of the autonomic nervous system of subject 200 by controlling speaker 80 and scent generator 90.

In addition, for example, environmental control system 10 further includes environment measuring apparatus 100 which measures environmental information in space 300 in which subject 200 is located.

Environmental control system 10 is capable of controlling target apparatus for reducing the disorder of the autonomic nervous system of subject 200, based on environmental information in space 300.

In addition, for example, environmental control system 10 includes biological information measuring apparatus 110 which measures biological information of subject 200. Control apparatus 120 adjusts details of the control on wind blower 20, based on the biological information of subject 200 obtained.

Environmental control system 10 is capable of reducing the disorder of the autonomic nervous system of subject 200 more effectively, based on the biological information of subject 200.

In addition, for example, control apparatus 120 controls wind blower 20 regardless of the at least one time, based on a predetermined operation.

Environmental control system 10 is capable of performing, for example, the operation for switching between the first control and the second control by subject 200 performing an operation.

In addition, for example, control apparatus 120 obtains a sunrise time and a sunset time, based on a time specifying operation.

Environmental control system 10 is capable of obtaining the sunrise time and the sunset time according to the time specifying operation performed by subject 200, or the like.

In addition, for example, control apparatus 120 obtains a sunrise time and a sunset time, based on a location specifying operation for specifying a location of space 300 in which subject 200 is located.

Environmental control system 10 is capable of obtaining the sunrise time and the sunset time according to the location specifying operation performed by subject 200, or the like.

In addition, for example, control apparatus 120 obtains a sunrise time and a sunset time, based on information obtained from a satellite positioning system.

Environmental control system 10 is capable of obtaining the sunrise time and the sunset time using the satellite positioning system.

In addition, for example, an environmental control method which is executed by a computer such as environmental control system 10 obtains at least one time included in a scheduled wake-up time of subject 200, a scheduled go-to-bed time of subject 200, a sunrise time, and a sunset time, and switches control on wind blower 20 which blows wind toward subject 200 at the at least one time obtained.

The environmental control method makes it possible to reduce the disorder of the autonomic nervous system of subject 200 by appropriately switching control on wind blower 20 at the at least one time included in the scheduled wake-up time of subject 200, the scheduled go-to-bed time of subject 200, the sunrise time, and the sunset time.

### [Other Embodiments]

Although the embodiment has been described above, the present invention is not limited to the above embodiment.

For example, in the above embodiment, the processing executed by a particular processing unit may be executed by another processing unit. The order of a plurality of processes may be changed, or a plurality of processes may be executed in parallel.

In the above embodiment, each of the constituent elements may be implemented by a software program suitable for the constituent element being executed. Each of the constituent elements may be implemented by means of a program executer such as a CPU or a processor reading and executing a software program recorded on a recording medium such as a hard disc or semiconductor memory.

In addition, each of the constituent elements may be executed by hardware. Each of the constituent elements may be a circuit (or an integrated circuit). These circuits may be configured as a single circuit as a whole, or may be configured as individual circuits. In addition, these circuits may be general-purpose circuits, or dedicated circuits.

Alternatively, the general or specific embodiment of the present invention may be implemented as a system, an apparatus, a method, an integrated circuit, a computer program, or a recording medium such as a computer-readable CD-ROM. Alternatively, the general or specific embodiment of the present invention may be implemented as a combination of a system, an apparatus, a method, an integrated circuit, a computer program, or a recording medium.

For example, the present invention may be implemented as an environmental control method, a program for causing a computer to execute the environmental control method, or a non-transitory computer-readable recording medium on which such a program is recorded.

Alternatively, the present invention may be implemented as a control apparatus according to the embodiment, or as a program which is executed by a computer in order to cause the computer to function as such a control apparatus. Alternatively, the present invention may be implemented as a computer-readable non-transitory recording medium on which such a program is recorded.

In addition, the environmental control system is implemented as a plurality of apparatuses in the embodiment, but may be implemented as a single apparatus. When the environmental control system is implemented as a plurality of apparatuses, the constituent elements of the environmental control system described in the embodiment may be allocated to a plurality of apparatuses in any way.

Furthermore, the present invention encompasses embodiments obtainable by adding, to any of these embodiments, various kinds of modifications that a person skilled in the art would arrive at and embodiments configurable by combining constituent elements in different embodiments without deviating from the scope of the present disclosure.

### [Reference Signs List]

- 10: environmental control system
- 20: wind blower
- 30: air conditioner
- 40: lighting apparatus
- 50: outside light adjusting apparatus
- 60: indirect lighting apparatus
- 70: ventilator
- 80: speaker
- 90: scent generator
- 100: environment measuring apparatus
- 110: biological information measuring apparatus
- 120: control apparatus
- 200: subject
- 300: space

## Claims

1. An environmental control system, comprising:
a wind blower which blows wind toward a subject; and
a control apparatus which obtains at least one time included in a scheduled wake-up time of the subject, a scheduled go-to-bed time of the subject, a sunrise time, and a sunset time, and switches control on the wind blower at the at least one time obtained.

2. The environmental control system according to claim 1, wherein the control apparatus:
obtains the scheduled wake-up time, the scheduled go-to-bed time, and the sunset time;
performs first control which makes a function of a sympathetic nervous system of the subject dominant over a function of a parasympathetic nervous system of the subject by changing a wind speed of the wind that is blown by the wind blower at a predetermined cycle during a period from the scheduled wake-up time to an earlier one of the scheduled go-to-bed time and the sunset time; and
performs second control which makes the function of the parasympathetic nervous system of the subject dominant over the function of the sympathetic nervous system of the subject by decreasing a wind speed of the wind that is blown by the wind blower to a wind speed lower than the wind speed in the first control, the second control being started at or after the earlier one of the scheduled go-to-bed time or the sunset time.

3. The environmental control system according to claim 2, wherein the control apparatus fluctuates the wind speed of the wind that is blown by the wind blower at a time interval shorter than the predetermined cycle in the first control.

4. The environmental control system according to any one of claim 1 to claim 3, further comprising:
an air conditioner for adjusting a temperature in a space in which the subject is located,
wherein the control apparatus switches control on the air conditioner at the at least one time obtained.

5. The environmental control system according to any one of claim 1 to claim 4, further comprising:
a lighting apparatus which illuminates a space in which the subject is located,
wherein the control apparatus switches color temperature control on the lighting apparatus at the at least one time obtained.

6. The environmental control system according to any one of claim 1 to claim 5, further comprising:
a lighting apparatus which illuminates a space in which the subject is located,
wherein the control apparatus switches illuminance control on the lighting apparatus at the at least one time obtained.

7. The environmental control system according to any one of claim 1 to claim 6, further comprising:
an indirect lighting apparatus disposed in a space in which the subject is located,
wherein the control apparatus switches an emission color of light that is emitted by the indirect lighting apparatus to a favorite color that the subject likes or an unfavorite color that the subject does not like at the at least one time obtained, the favorite color and the unfavorite color being set in advance.

8. The environmental control system according to any one of claim 1 to claim 7, further comprising:
a ventilator which ventilates a space in which the subject is located,
wherein the control apparatus switches control of carbon dioxide concentration on the ventilator in the space at the at least one time obtained.

9. The environmental control system according to any one of claim 1 to claim 8, further comprising:
an outside light adjusting apparatus which adjusts an amount of outside light that enters a space in which the subject is located,
wherein the control apparatus switches control on the outside light adjusting apparatus at the at least one time obtained.

10. The environmental control system according to any one of claim 1 to claim 9, further comprising:
a speaker and a scent generator which are disposed in a space in which the subject is located.

11. The environmental control system according to any one of claim 1 to claim 10, further comprising:
an environment measuring apparatus which measures environmental information in a space in which the subject is located.

12. The environmental control system according to any one of claim 1 to claim 11, further comprising:
a biological information measuring apparatus which measures biological information of the subject,
wherein the control apparatus adjusts details of the control on the wind blower, based on the biological information of the subject measured.

13. The environmental control system according to any one of claim 1 to claim 12,
wherein the control apparatus controls the wind blower regardless of the at least one time, based on a predetermined operation.

14. The environmental control system according to any one of claim 1 to claim 13,
wherein the control apparatus obtains the sunrise time and the sunset time, based on a time specifying operation.

15. The environmental control system according to any one of claim 1 to claim 13,
wherein the control apparatus obtains the sunrise time and the sunset time, based on a location specifying operation for specifying a location of a space in which the subject is located.

16. The environmental control system according to any one of claim 1 to claim 13,
wherein the control apparatus obtains the sunrise time and the sunset time, based on information obtained from a satellite positioning system.

17. An environmental control method, comprising:
obtaining at least one time included in a scheduled wake-up time of the subject, a scheduled go-to-bed time of the subject, a sunrise time, and a sunset time; and
switching control on the wind blower which blows wind toward a subject, at the at least one time obtained.
